(19) **Europäisches Patentamt**
**European Patent Office**
**Office européen des brevets**

(11) **EP 2 822 336 B1**

(12) **EUROPEAN PATENT SPECIFICATION**

(45) Date of publication and mention
of the grant of the patent:
**26.12.2018 Bulletin 2018/52**

(21) Application number: **12865826.7**

(22) Date of filing: **09.11.2012**

(51) Int Cl.:
**H04W 68/04** (2009.01)

(86) International application number:
**PCT/JP2012/007217**

(87) International publication number:
**WO 2013/108319 (25.07.2013 Gazette 2013/30)**

(54) **PAGING AREA CONTROL DEVICE, PAGING AREA CONTROL METHOD, MOBILE COMMUNICATIONS SYSTEM, AND MOBILE STATION**

VORRICHTUNG ZUR FUNKRUFBEREICHSSTEUERUNG, VERFAHREN ZUR FUNKRUFBEREICHSSTEUERUNG, MOBILES KOMMUNIKATIONSSYSTEM UND MOBILSTATION

DISPOSITIF DE CONTRÔLE DE ZONE DE RADIOMESSAGERIE, PROCÉDÉ DE CONTRÔLE DE ZONE DE RADIOMESSAGERIE, SYSTÈME DE COMMUNICATION MOBILE ET STATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2012 JP 2012006344**

(43) Date of publication of application:
**07.01.2015 Bulletin 2015/02**

(73) Proprietor: **NEC Corporation**
**Tokyo 108-8001 (JP)**

(72) Inventor: **IWAI, Takanori**
**Tokyo 1088001 (JP)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-2004/114703      WO-A1-2006/079210**
**WO-A1-2008/063734      WO-A2-2004/002186**
**WO-A2-2009/091743      JP-A- 2008 199 395**
**JP-A- 2011 160 415      US-A1- 2007 077 947**
**US-A1- 2011 098 051**

## Description

### Technical Field

The present invention relates to paging of a mobile station in a mobile communication system and, more particularly, to determination of an area where a paging signal is sent (hereinafter referred to as the paging area).

### Background Art

A multiple access mobile communication system enables a plurality of mobile stations to establish radio communication substantially simultaneously, by sharing radio resources including at least one of time, frequency, and transmission power among the plurality of mobile stations. Typical examples of multiple access schemes include TDMA (Time Division Multiple Access), FDMA (Frequency Division Multiple Access), CDMA (Code Division Multiple Access), OFDMA (Orthogonal Frequency Division Multiple Access), and any combination thereof.

Unless noted otherwise, the term "a mobile communication system" used in the present specification refers to a multiple access mobile communication system. A mobile communication system includes mobile stations and an upper network. An upper network includes base stations, a relay node that relays traffic, and a control node that performs radio resource management, mobility management, bearer management and the like.

When new downlink traffic (downlink data or incoming voice call) to a mobile station in a standby state has arrived at an upper network, the upper network sends a paging signal to the mobile station. The mobile station in the standby state performs a discontinuous reception (DRX) for receiving a paging signal. In response to receiving the paging signal designated thereto, the mobile station initiates signaling in order to perform communication for receiving the downlink traffic. This signaling includes transmission of a response message to the paging. The response message includes one or both of a request for establishing a control connection and a service request for establishing a communication path (bearer) for user data. The network receives the response message and then performs procedures for establishing the control connection and the communication path (bearer) required for sending the downlink traffic to the mobile station.

Note that, to page a mobile station, the upper network has to determine an area where a paging signal is sent. In the present specification, "an area where a paging signal is sent" is referred to as "a paging area". A paging area includes at least one cell (or sector), and generally includes a plurality of cells (or sectors). Typically, a paging area for a mobile station is identical to the latest location registration area to which the mobile station belongs. The location registration area is a fundamental unit in the upper network for managing a location of the mobile station in the standby state. The mobile station sends a location update request to the upper network when the mobile station crosses over from one location registration area to another. Further, the mobile station may periodically send a location update request irrespective of occurrence of any change in the location registration area.

For example, in connection with the packet exchanged domain of the UMTS (Universal Mobile Telecommunications System) of the 3GPP (the 3rd Generation Partnership Project), the location registration area is referred to as a routing area (RA). Accordingly, paging of a mobile station in a standby state (CELL_PCH state or URA_PCH state) is generally performed by broadcasting a paging signal over the entire routing area.

Further, in the LTE (Long Term Evolution) of the 3GPP, the location registration area is referred to as a tracking area (TA). Accordingly, paging of a mobile station in a standby state (RRC_IDLE (ECM_IDLE) state) is generally performed by broadcasting a paging signal over the entire routing area.

However, in order to reduce a paging load, narrower paging area is required than in the conventional paging which is performed on a location registration area-by-location registration area basis. Patent Literatures 1 and 2 disclose the technique of determining narrower paging area as compared to the normal location registration area through use of a movement history of a mobile station.

Patent Literature 1 discloses calculating a movement distance per unit time (i.e., a moving speed) of a mobile station using a history of location update requests sent from the mobile station, and determining, as the paging area, base stations wtihin a circle having a radius equal to the calculated movement distance.

Patent Literature 2 discloses performing a location management of a mobile station using not only the location update requests but also GPS (Global Positioning System) location information. The method disclosed in Patent Literature 2 includes determining, when the latest location information of a mobile station obtained by the upper network is GPS location information, reduced paging area which is narrower than the location registration area based on the GPS location.

Further, Patent Literature 2 discloses calculating a moving speed of a mobile station using a history of location update messages and that of GPS location information, and increasing the paging area as the moving speed of the mobile station becomes larger. Specifically, in order to enlarge the paging area, an identifier for specifying the paging area is changed in order of a sector identifier, a radio network controller (RNC) identifier, and a routing area indicator (RAI).

WO 2008/063734 A1 discloses a wireless communication system, method, and information processing system for optimising paging channel utilisation. The method includes determining a mobility state of a wireless device. If the mobility state of the wireless device is a mobile state, a signal is generated for a page to be transmitted to a set of base stations in a paging area that the wireless device is currently located in. If the mobility state of the wireless device is a stationary state, a subset of base stations from the set of base stations within the paging area is selected. A signal is then generated for a page to be transmitted to the subset of base stations.

WO 2004/002186 A2 discloses a method and apparatus for optimizing registration and paging in a group communication system using mobility of the participating mobile stations to minimise the number of registrations performed by the participating mobile stations as well as the area of paging the participating mobile stations. When the participating mobile stations have a low mobility status, the base station reduces the area of paging the mobile stations so that the paging channel load is reduced.

WO 2006/079210 A1 discloses a method and system for determining a paging zone in a wireless network.

### Citation List

### Patent Literature

[Patent Literature 1] Japanese Unexamined Patent Application Publication No. 2011-49616
[Patent Literature 2] Japanese Unexamined Patent Application Publication No. 2006-211335

### Summary of Invention

### Technical Problem

The inventor of the present application has conducted a study of a usage scenario in which MTC (Machine Type Communication) is accommodated in a mobile communication system. The MTC is also referred to as the M2M network or the sensor network. In the case of accommodating the MTC in a mobile communication system, functions of a mobile station are arranged in a machine (e.g., a vending machine, a gas meter, an electricity meter, an automobile, or a railway vehicle) and a sensor (e.g., a sensor relating to environment, agriculture, or transportation). Then, a monitoring system (i.e., a computer) placed at a monitoring site such as data center collects information retained by such machines and sensors (e.g., sales information, inventory information, or measurement information of sensors) via a radio communication system.

The inventor has found the following problems in the usage scenario in which the MTC (Machine Type Communication) is accommodated in a mobile communication system. It is expected that a mobility characteristic greatly differs between a conventional mobile station carried by a person such as a mobile phone, a smartphone, a tablet computer and the like (i.e., a communication terminal) and a mobile station used in the MTC. Further, in the MTC itself, the mobility characteristic greatly differs between a statically installed device such as a vending machine, a gas meter and the like, and a transportation machine such as an automobile, a railway vehicle and the like. Still further, in the transportation machine category itself, it is expected that the mobility characteristic greatly differs between an automobile and a railway vehicle. Here, the mobility characteristic includes at least one of presence/absence of mobility, a moving speed, a moving direction, a restriction on a range of movement, a randomness of movement, and a repetitiveness of movement.

Patent Literatures 1 and 2 merely show determining the paging area according to one algorithm, which is to change the size of the paging area according to the moving speed of a mobile station. Accordingly, though the techniques disclosed in Patent Literatures 1 and 2 may be capable of determining a proper paging area for a mobile station having a certain mobility characteristic, but may be incapable of determining a proper paging area for a mobile station having other mobility characteristic.

The present invention has been made based on the findings of the inventor of the present application. That is, an object of the present invention is to provide a paging area control apparatus, a paging area control method, a mobile communication system, a mobile station, and a program that are capable of contributing to determining a proper paging area corresponding to the mobility characteristic of a mobile station.

### Solution to Problem

A first aspect of the present invention includes a paging area control apparatus. The paging area control apparatus includes an algorithm selecting unit and a PA determining unit. The algorithm selecting unit selects an algorithm that corresponds to a mobility characteristic of a mobile station from a plurality of paging area determining algorithms.

The PA determining unit determines a paging area of the mobile station using the selected algorithm. The plurality of paging area determining algorithms include a first algorithm. The selecting means is adapted to select, from the plurality of paging area determining algorithms, the first algorithm to be used by the determining means to determine the paging area. The first algorithm includes determining the paging area based on a non-circular and non-spherical geographical region which covers a moving direction of the mobile station as compared to other directions. The region is in the shape of an ellipse or an ellipsoid, and an eccentricity of the ellipse or the ellipsoid is determined in accordance with magnitude of a randomness of movement of the mobile station or variations in the moving direction, the randomness of movement of the mobile station being a movement without regularity in a movement trajectory of the mobile station

A second aspect of the present invention includes a paging area control method. The method includes selecting an algorithm that corresponds to a mobility characteristic of a mobile station from a plurality of paging area determining algorithms, and determining a paging area of the mobile station using the selected algorithm. The plurality of paging area determining algorithms include a first algorithm. The selecting includes selecting, from the plurality of paging area determining algorithms, the first algorithm to be used in the determining of the paging area. The the first algorithm includes determining the paging area based on a non-circular and non-spherical geographical region which covers a moving direction of the mobile station as compared to other directions. The region is in the shape of an ellipse or an ellipsoid, and an eccentricity of the ellipse or the ellipsoid is determined in accordance with magnitude of a randomness of movement of the mobile station or variations in the moving direction, the randomness of movement of the mobile station being a movement without regularity in a movement trajectory of the mobile station.

A third aspect of the present invention includes a mobile communication system including the paging area control apparatus according to the first aspect described above. The system also includes a paging unit for sending a paging signal into the paging area determined by the paging area control apparatus, in order to page the mobile station.

Advantageous Effects of Invention

According to the above-mentioned aspects, it is possible to provide a paging area control apparatus, a paging area control method, a mobile communication system, a mobile station, and a program that are capable of contributing to determining a proper paging area corresponding to the mobility characteristic of a mobile station.

Brief Description of Drawings

Fig. 1 is a diagram showing a configuration example of a mobile communication system according to an embodiment of the present invention.
Fig. 2 is a diagram showing a configuration example of a mobility management node according to the embodiment of the present invention.
Fig. 3 is a flowchart showing a specific example of a paging control procedure according to the embodiment of the present invention.
Fig. 4 is a diagram showing a configuration example of a mobile communication system according to an example of the present invention.
Fig. 5 is a diagram showing one example of information retained by a subscriber server according to the example of the present invention.
Fig. 6 is a flowchart showing a specific example of a paging control procedure according to the example of the present invention.
Fig. 7 is a sequence diagram showing one example of a paging procedure according to the example of the present invention.
Fig. 8 is a diagram showing a configuration example of a mobility management node according to an another example of the present invention.
Fig. 9 is a flowchart showing a specific example of a procedure of selecting a paging determining algorithm according to the example of the present invention.
Fig. 10 is a sequence diagram showing one example of a paging procedure according to the example of the present invention.
Fig. 11 is a diagram showing a configuration example of a mobile communication system according to an another example of the present invention.
Fig. 12 is a diagram showing a configuration example of a PA control node according to the example of the present invention.
Fig. 13 is a sequence diagram showing one example of a paging procedure according to the example of the present invention.

Fig. 14A is a conceptual diagram for describing a paging area determining procedure according to an another example of the present invention.

Fig. 14B is a conceptual diagram for describing the paging area determining procedure according to the example of the present invention.

Fig. 14C is a conceptual diagram for describing the paging area determining procedure according to the example of the present invention.

Fig. 15 is a flowchart showing a specific example of a paging area determining procedure according to the example of the present invention.

## Description of Embodiments

Hereinafter, exemplary embodiments will be described in detail with reference to the drawings. In the drawings, the same or corresponding elements are denoted by the same reference numerals, and a repeated explanation is omitted as needed for clarity of the explanation.

First Embodiment

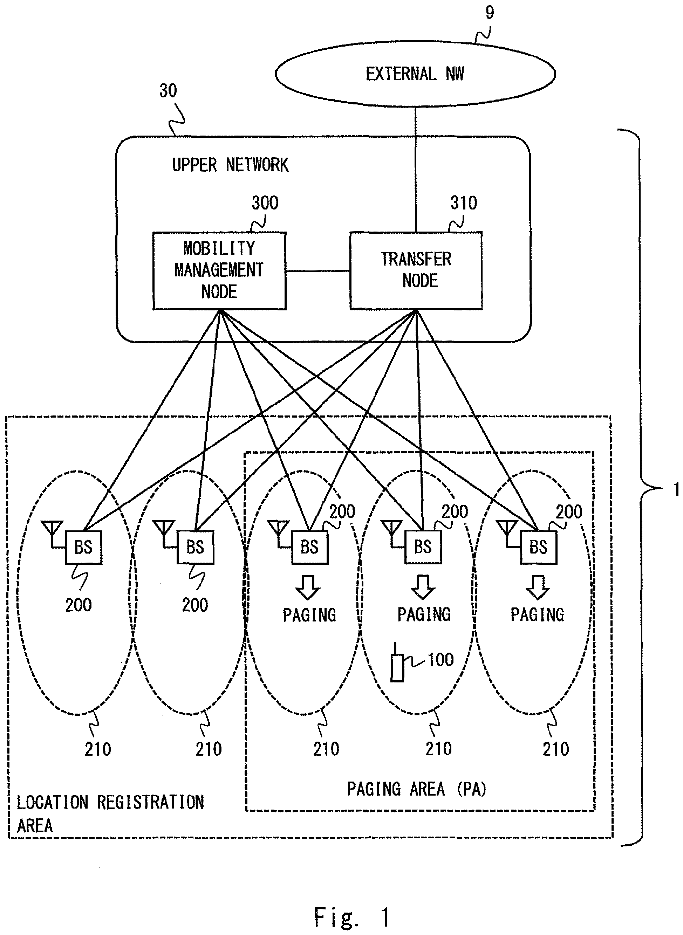

Fig. 1 is a block diagram showing a configuration example of a mobile communication system 1 according to the first embodiment. The mobile communication system 1 includes a mobile station 100, a plurality of base stations 200, and an upper network 30. Note that, though Fig. 1 shows only one mobile station 100 for the sake of convenience, the system 1 may include a plurality of mobile stations 100. Each of the base stations 200 generates a cell 210, and establishes a connection with the mobile station 100 by means of a radio access technology to relay user data between the mobile station 100 and the upper network 30.

The upper network 30 is communicatively connected to the base stations 200. The upper network 30 has a function of relaying user data transferred between the mobile station 100 and an external network 9. Further, the upper network 30 performs management of subscriber information and mobility management for the mobile station 100. The mobility management includes location management of the mobile station 100, and control of paging to the mobile station 100 in the standby state. The upper network 30 is a network mainly administrated by an operator providing mobile communication service. For example, the upper network 30 includes a core network (e.g., the EPC (Evolved Packet Core) of the LTE, the UMTS packet core). Further, the upper network 30 may include nodes (e.g., the RNC) of a radio access network excluding the plurality of base stations 200.

In the example shown in Fig. 1, the upper network 30 includes a mobility management node 300 and a transfer node 310. The transfer node 310 is a user-plane node, and performs transfer processing (e.g., routing and forwarding) of user data. Note that, the transfer node 310 may include a plurality of transfer nodes. For example, in the case of the UMTS, the transfer node 310 includes the user-plane function of the SGSN (Serving GPRS Support Node) and the user-plane function of the GGSN (Gateway GPRS Support Node). Further, in the case of the LTE, the transfer node 310 includes the S-GW (Serving Gateway) and the P-GW (Packet Data Network Gateway).

The mobility management node 300 is a control-plane node, and performs mobility management including control of paging to the mobile station 100. For example, in the case of the UMTS, the mobility management node 300 includes the control-plane function of the SGSN. Further, in case of the LTE, the mobility management node 300 includes the MME (Mobility Management Entity).

In the first embodiment, the mobility management node 300 performs the following processing as to the control of paging to the mobile station 100. That is, the mobility management node 300 selects an algorithm to be used for determining a paging area (PA) of the mobile station 100, from a plurality of paging area (PA) determining algorithms, in accordance with a mobility characteristic of the mobile station 100. Further, the mobility management node 300 determines the PA of the mobile station 100 using the selected PA determining algorithm. When downlink traffic (e.g., data, voice) addressed to the mobile station 100 in the standby state arrives at the upper network 30, the mobility management node 300 instructs at least one base station within the determined PA out of the plurality of base stations 200 to send a paging signal. The base station 200 receives the paging instruction from the mobility management node 300, and then transmits a paging signal using a downlink channel. Note that, in the UMTS, an RNC sends a paging signal through the base stations 200. Accordingly, the mobility management node 300 may request an RNC to transmit a paging signal.

The mobility characteristic of the mobile station 100 taken into account to select the PA determining algorithm includes, for example, at least one of presence/absence of mobility, a moving speed, a moving direction, a restriction on a range of movement, a randomness of movement, and a repetitiveness of movement, each relating to the mobile station 100.

The presence/absence of mobility means whether the mobile station 100 has substantial mobility. For example, in the case where the mobile station 100 is mounted on a statically installed device such as a vending machine and a gas meter, the mobile station 100 does not have substantial mobility.

The restriction on a range of movement means that any restriction is placed on a geographical range in which the mobile station 100 can substantially move. For example, when the mobile station 100 is mounted on a railway vehicle, a geographical range in which the mobile station 100 can substantially move is restricted to a one-dimensional region along a railroad.

The randomness of movement means that a moving direction of the mobile station 100 changes randomly irrespective of the past movement history. In other words, it means that there is no substantial regularity in a movement trajectory of the mobile station 100. The repetitiveness of movement is the concept being opposite to the randomness of movement, and means that there is any regularity in the moving direction or movement trajectory of the mobile station 100.

The plurality of PA determining algorithms include a plurality of algorithms corresponding to a plurality of types of mobility of the mobile station 100. Four exemplary PA determining algorithms are shown in the following. Note that, the PA determining algorithms that can be used in the present embodiment are not limited to the following four algorithms, and other PA determining algorithm can be used.

(Algorithm 1)

Algorithm 1 includes: specifying a fixed geographical region that includes the latest location of the mobile station 100 (e.g., a base station 200 to which the mobile station 100 belongs, a cell 210 to which the mobile station 100 belongs, or the location obtained by GPS); and determining, as the paging area (PA), a base station(s) 200 that is within the specified fixed geographical region or a cell 210 that at least partially overlaps with the specified fixed geographical region. The fixed geographical region may be, for example, a circle of a fixed radius including the latest location of the mobile station 100. Alternatively, the fixed geographical region may be the location registration area (e.g., the routing area, the tracking area) to which the mobile station 100 belongs. Algorithm 1 may be applied in the case where the mobile station 100 is a conventional mobile terminal (e.g., a mobile phone, a smartphone, and a tablet computer).

(Algorithm 2)

Algorithm 2 includes: specifying a geographical region whose dependence on the moving direction of the mobile station 100 is small and whose size is variable; and selecting, as the PA, a base station(s) 200 that is within the specified geographical region or a cell(s) 210 that at least partially overlaps with the geographical region. The geographical region whose dependence on the moving direction is small is, for example, a circular region. The size of the geographical region may be determined in accordance with the moving speed of the mobile station 100. For example, the PA determining scheme disclosed in Patent Literature 1 or 2 can be used as Algorithm 2. Algorithm 2 may be applied in the case where the randomness of movement of the mobile station 100 is large, for example when the mobile station 100 is mounted on an automobile.

(Algorithm 3)

Algorithm 3 includes: specifying a geographical region whose dependence on the moving direction of the mobile station 100 is large; and selecting, as the PA, a base station(s) 200 that is within the geographical region or a cell(s) 210 that at least partially overlaps with the geographical region. The geographical region whose dependence on the moving direction is large corresponds to a non-circular and non-spherical geographical region which preferentially covers a moving direction of the mobile station 100 as compared to other directions. For example, the geographical region whose dependence on the moving direction is large is an ellipsoidal (two dimensions) or ellipsoidal (three dimensions) region. Note that, in Algorithm 3, the size of the geographical region may be variable. The size of the geographical region may be determined in accordance with the moving speed of the mobile station 100. Algorithm 3 may be applied in the case where the restriction on a range of movement is imposed upon the mobile station 100, or in the case where the repetitiveness of movement of the mobile station 100 is large, particularly in the case where the moving direction of the mobile station 100 is substantially linear. One specific example of the case where the moving direction of the mobile station 100 is substantially linear is the case where the mobile station 100 is mounted on a railway vehicle.

(Algorithm 4)

Algorithm 4 includes selecting, as the PA, just one cell that includes the latest location of the mobile station 100 (e.g., a base station 200 to which the mobile station 100 belongs, a cell 210 to which the mobile station 100 belongs, or the location obtained by GPS). Algorithm 4 may be applied to the case where the mobile station 100 has substantially no mobility, for example, when the mobile station 100 is mounted on a statically installed device (e.g., a vending machine, a gas meter, an electricity meter).

Next, a description will be given of timing when the mobility management node 300 selects the PA determining algorithm and determines the PA. The selection of the PA determining algorithm and determination of the PA pertaining to a mobile station 100 may take place in response to arrival of downlink traffic addressed to the mobile station 100. Further, at least the selection of the PA determining algorithm may be previously performed irrespective of arrival of downlink traffic. Further, both the selection of the PA determining algorithm and the determination of the PA may be previously performed irrespective of arrival of downlink traffic.

Subsequently, a description will be given of the selection of the paging area. Fig. 1 shows the case of determining, as the PA, from an area that is within a location registration area (e.g., a routing area (RA) in UMTS packet domain, a tracking area (TA) in LTE) to which a mobile station 100 belongs. That is, at least one base station 200 (or at least one cell 210) to send a paging signal to the mobile station 100 is selected as the PA from a plurality of base stations 200 (or a plurality of cells 210) that are within the location registration area to which the mobile station 100 in the standby state belongs.

However, for example the LTE allows one mobile station 100 to belong to a plurality of TAs. Accordingly, the mobility management node 300 may select, as the PA, at least one TA from a plurality of TAs to which the mobile station 100 belongs, in accordance with the PA determining algorithm applied to the mobile station 100.

Further, the mobility management node 300 may determine the PA independently of the location registration area to which the mobile station 100 in the standby state belongs. In some cases, the mobility management node 300 can obtain the latest location of the mobile station 100 in the standby state more specifically than the location registration area. For example, the mobility management node 300 can receive a location update request (e.g., a TAU (Tracking Area Update) request of the LTE or a RAU (Routing Area Update) request of the UMTS) that is periodically sent from the mobile station 100. In this case, the mobility management node 300 can obtain the latest location of the mobile station 100 with a granularity of the base station 200 (or the cell 210) having received the location update request. Further, in some cases, the mobility management node 300 can use the location information of the mobile station 100 obtained by GPS. In such cases, the mobility management node 300 may determine the geographical region that includes the latest location of the mobile station 100 (e.g., the base station 200, the cell 210, the location obtained by GPS) by the PA determining algorithm, and select at least one base station 200 or cell 210 within the geographical region as the PA.

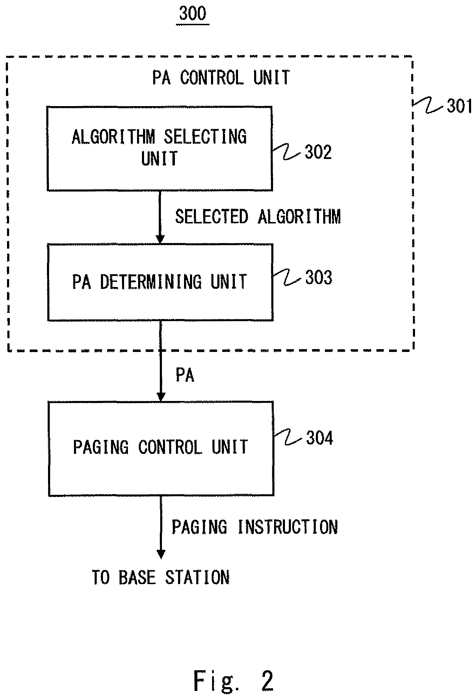

Subsequently, a description will be given of a specific example of the configuration and operation of the mobility management node 300. Fig. 2 is a block diagram showing a configuration example of the mobility management node 300. Note that, Fig. 2 shows the elements relating to the paging control out of the functions of the mobility management node 300. The configuration example shown in Fig. 2 includes a paging area (PA) control unit 301 and a paging control unit 304. The PA control unit 301 includes an algorithm selecting unit 302 and a PA determining unit 303. The algorithm selecting unit 302 selects the PA determining algorithm pertaining to the mobile station 100 described above. Further, the PA determining unit 303 determines the PA of the mobile station 100 using the algorithm selected by the algorithm selecting unit 302.

When downlink traffic addressed to a mobile station 100 in the standby state has arrived at the upper network 30, the paging control unit 304 sends a paging instruction to the base station 200 (or a control apparatus such as the RNC) within the PA that is determined by the PA determining unit 303. The paging instruction includes a mobile station identifier (hereinafter referred to as the MSID) for specifying the mobile station 100 as the paging target. The MSID included in the paging instruction is, for example, TMSI (Temporary Mobile Subscriber Identity), P-TMSI (Packet TMSI), M-TMSI (MME-TMSI), GUTI (Globally Unique Temporary ID), or IMSI (International Mobile Subscriber Identity).

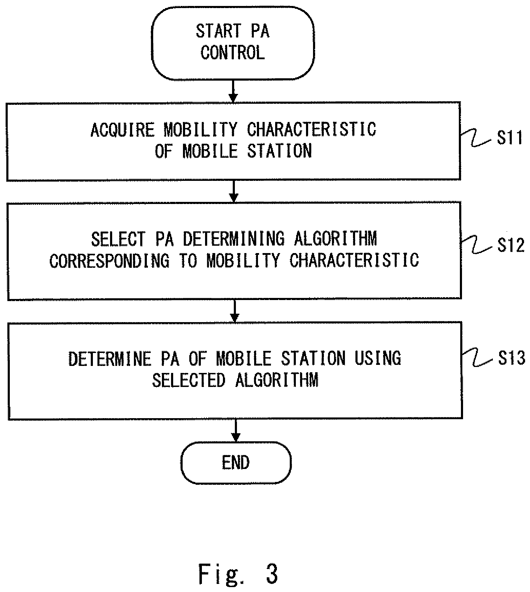

Fig. 3 is a flowchart showing one example of the PA control procedure performed by the mobility management node 300. In Step S11, the mobility management node 300 acquires the mobility characteristic of the mobile station 100. The acquisition of the mobility characteristic of the mobile station 100 may be performed, for example, by acquiring type information of the mobile station 100 from a subscriber server (not shown). The subscriber server is a device that retains the subscriber information of the mobile station 100. For example, an HSS (Home Subscriber Server) or an HLR (Home Location Server) corresponds to the subscriber server. The type information of the mobile station 100 is required to be associated with the mobility type of the mobile station 100. For example, the type information may be given to the mobile station 100 based on the difference in the device on which the mobile station 100 is mounted, such as a conventional mobile terminal (e.g., a mobile phone, a smartphone, and a tablet computer), an automobile, a railway vehicle, and a vending machine.

Further, the acquisition of the mobility characteristic of the mobile station 100 in Step S11 may be performed by acquiring a movement history from a server retaining the movement history of the mobile station 100 (not shown). Further, the mobility management node 300 may autonomously obtain the movement history of the mobile station 100 by referring to the location update request periodically sent from the mobile station 100. The movement history is required to be capable of allowing the mobility management node 300 to know temporal changes in the location of the mobile station. Accordingly, the movement history may be a history of the base stations 200 to which the mobile station 100 has connected, that of the cells 210 to which the mobile station 100 has connected, or that of the location information of the mobile station 100 obtained by GPS. By obtaining a movement trajectory based on the movement history of the mobile station 100, the mobility management node 300 can know the mobility characteristic of the mobile station 100.

In Step S12 shown in Fig. 3, the mobility management node 300 selects an algorithm corresponding to the acquired mobility characteristic, from a plurality of PA determining algorithms. In Step S13, the mobility management node 300 determines the PA of the mobile station 100 using the selected algorithm.

As described above, in the first embodiment, an algorithm corresponding to the mobility characteristic of the mobile station 100 is selected from of a plurality of PA determining algorithms, and the paging area of the mobile station 100 is determined using the selected algorithm. As described above, taking into account of various use cases of the mobile station 100 including the MTC (Machine Type Communication), it is possible that the mobility characteristic of the mobile station 100 greatly varies depending on a use case of the mobile station 100. Accordingly, it is expected that efficient PA determination cannot be made by using just one PA determining algorithm to every mobile station 100. However, according to the present embodiment, the PA can be determined using the PA determining algorithm corresponding to the mobility characteristic of a mobile station 100. Accordingly, the present embodiment can contribute to determining a proper paging area corresponding to the mobility characteristic of the mobile station 100.

Second Example

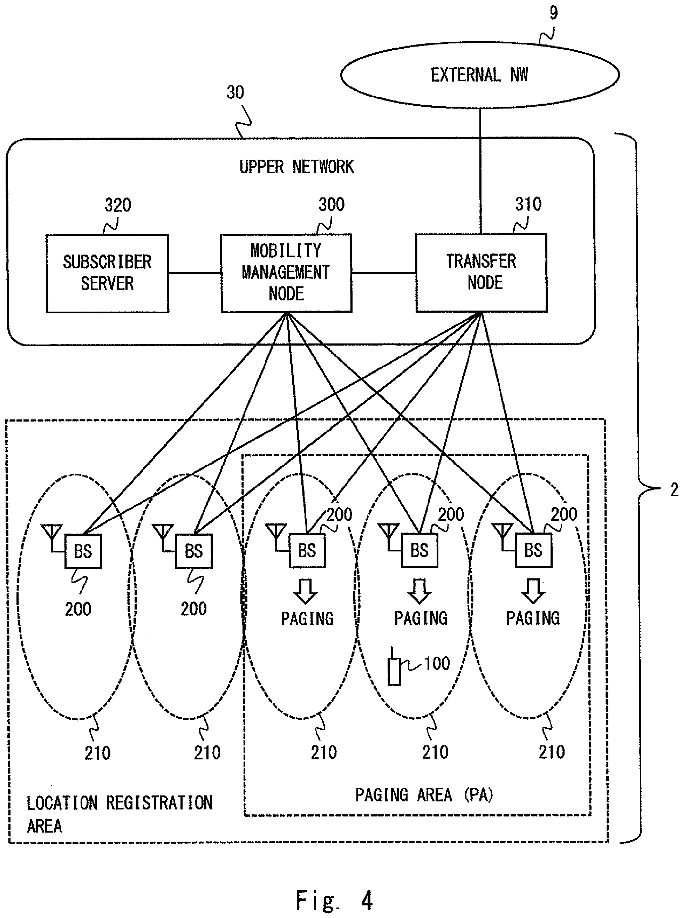

In the present example a description will be given of a specific example relating to the selecting of a PA determining algorithm described in the first embodiment. Fig. 4 is a block diagram showing a configuration example of a mobile communication system 2 according to the present example. The upper network 30 shown in Fig. 4 includes a subscriber server 320. The subscriber server 320 is an apparatus that retains the subscriber information of the mobile station 100. For example, an HSS (Home Subscriber Server) or an HLR (Home Location Server) corresponds thereto. The subscriber information retained by the subscriber server 320 includes the mobility type of the mobile station 100. The mobility management node 300 acquires the mobility type of the mobile station 100 from the subscriber server 320, thereby knowing the mobility characteristic of the mobile station 100.

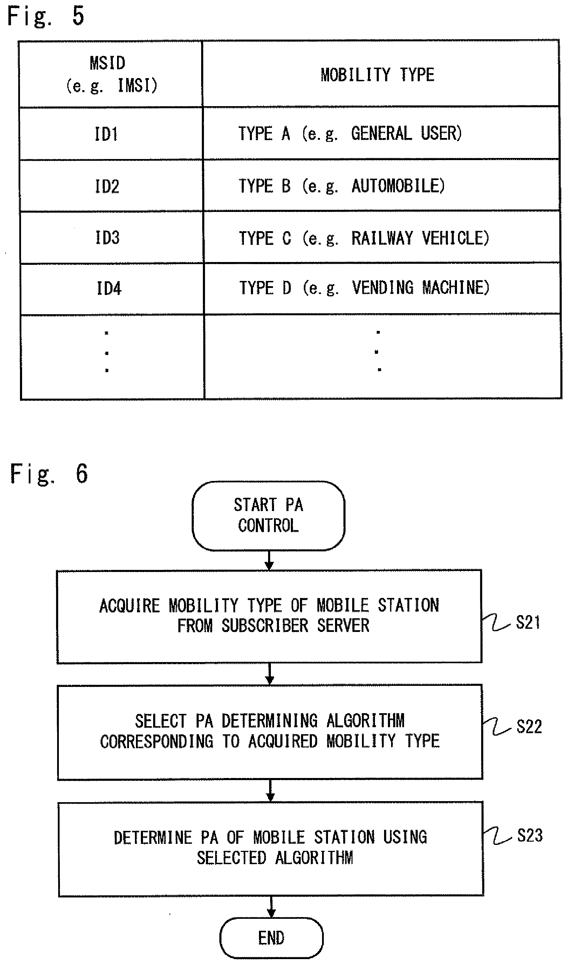

Fig. 5 shows a specific example of the mobility type retained by the subscriber server 320. As shown in Fig. 5, the subscriber server 320 may retain the mobility type in association with a mobile station identifier (MSID) for each of the plurality of mobile stations 100. In some cases, the MSID is referred to as the subscriber identifier. The MSID is, for example, the IMSI. Fig. 5 shows four examples of the mobility type, i.e., Type A to Type D. Type A is an identifier associated with a regular user, i.e., a conventional mobile terminal (e.g., a mobile phone, a smartphone, and a tablet computer). Type B is an identifier related to the MTC and associated with a transportation machine with a high randomness of movement e.g., an automobile. Type C is an identifier related to the MTC and associated with a transportation machine on which a large movement restriction is imposed, or a transportation machine with small randomness of movement, e.g., a railway vehicle. Type D is an identifier related to the MTC and associated with a device that has substantially no mobility and that is statically installed, e.g., a vending machine, an electricity meter, a gas meter and the like.

Fig. 6 is a flowchart showing one example of a PA control procedure performed by the mobility management node 300 according to the present example. Note that, the configuration of the mobility management node 300 according to the present embodiment may be similar to that of the configuration example shown in Fig. 2. In Step S21, the mobility management node 300 acquires the mobility type of the mobile station 100 from the subscriber server 320. In Step S22, the mobility management node 300 selects an algorithm that corresponds to the acquired mobility type from a plurality of PA determining algorithms. For example, Type A to Type D shown in Fig. 5 may be associated with Algorithms 1 to 4 described in the first embodiment, respectively. In Step S23, the mobility management node 300 determines the PA of the mobile station 100 using the selected algorithm.

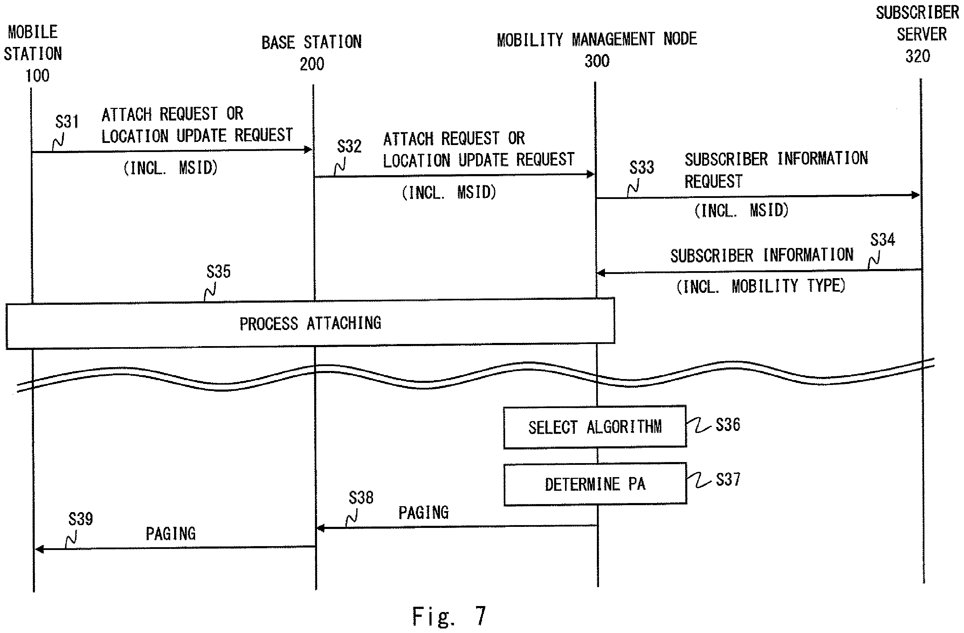

The mobility management node 300 may perform the acquisition of the mobility type of the mobile station 100 shown in Step S21 of Fig. 6 in response to reception of an attach request or location update request from the mobile station 100. This example will be described with reference to the sequence diagram of Fig. 7. In Step S31 of Fig. 7, the mobile station 100 sends an attach request or a location update request to the base station 200. In Step S32, the base station 200 transfers the attach request or location update request from the mobile station 100 to the mobility management node 300. The attach request is sent in order to request initial registration to the upper network 30. The attach request and the location update request each include the MSID (e.g., the GUTI or the IMSI) for specifying the mobile station 100. In the LTE, the IMSI corresponds to the subscriber identifier that is uniquely allotted to every mobile station managed by the subscriber server 320. On the other hand, the GUTI is the temporary identifier that the MME as the mobility management node 300 has allotted to the mobile station 100. The MME as the mobility management node 300 can acquire the IMSI of the mobile station 100 as necessary, by querying the past MME to which the mobile station 100 has connected in the past based on the GUTI received from the mobile station 100.

In Step S33, in response to reception of the attach request or the location update request, the mobility management node 300 requests the subscriber server 320 to send the subscriber information of the mobile station 100. The request sent in Step S33 includes the MSID of the mobile station 100 (which is the ID managed by the subscriber server 320, e.g., the IMSI). The request sent in Step S33 is, for example a location update request (e.g., a TAU request, an RAU request). In Step S34, the mobility management node 300 receives the subscriber information of the mobile station 100 from the subscriber server 320. The subscriber information includes the mobility type of the mobile station 100 described above. That is, in the example of Fig. 7, the mobility management node 300 acquires the mobility type of the mobile station 100 from the subscriber server 320 in the process of attaching the mobile station 100 or updating the location of the mobile station 100. In Step S35, the mobility management node 300 executes the attach processing of the mobile station 100 as necessary. Note that, Step S35 may be performed only at the initial attaching of the mobile station 100.

In Steps S36 and S37, the mobility management node 300 selects a PA determining algorithm and determines the PA using the mobility type of the mobile station 100 acquired from the subscriber server 320 in Step S34. The processes in Steps S36 and S37 may be performed in accordance with the flowchart of Fig. 6, for example. The timing at which Steps S36 and S37 are executed is not particularly limited. That is, Steps S36 and S37 may be executed in sequence following the reception of the attach request or location update request from the mobile station 100. Further, Steps S36 and S37 may be executed at any timing after the reception of the attach request or location update request from the mobile station 100. Still further, Steps S36 and S37 may be executed when performing paging of the mobile station 100 (arrival of downlink traffic). Still further, the mobility management node 300 may execute Step S36 in sequence following the reception of the attach request or location update request, and may execute Step S36 when performing paging of the mobile station 100 (arrival of downlink traffic).

In Step S38, the mobility management node 300 sends a paging request to each base station 200 included in the PA of the mobile station 100, in response to arrival of downlink traffic addressed to the mobile station 100 at the upper network 30. In Step S39, the base station 200 transmits a paging signal into the cell 210.

As described above, in the present embodiment, the information indicative of the mobility type of each mobile station 100 is retained in the subscriber server 320, and the PA determining algorithm to be applied to the mobile station 100 is selected using the information. Therefore, according to the present embodiment, a proper PA determining algorithm that corresponds to the mobility type of the mobile station 100 can be used.

Third Example

In the present example, a description will be given of other specific example relating to the selecting of a PA determining algorithm described in the first embodiment. The configuration of the mobile communication system according to the present example may be similar to the configuration example shown in Fig. 1. In the present embodiment, the mobility management node 300 acquires the movement history of a mobile station 100, and determines the mobility characteristic of the mobile station 100 using the movement history.

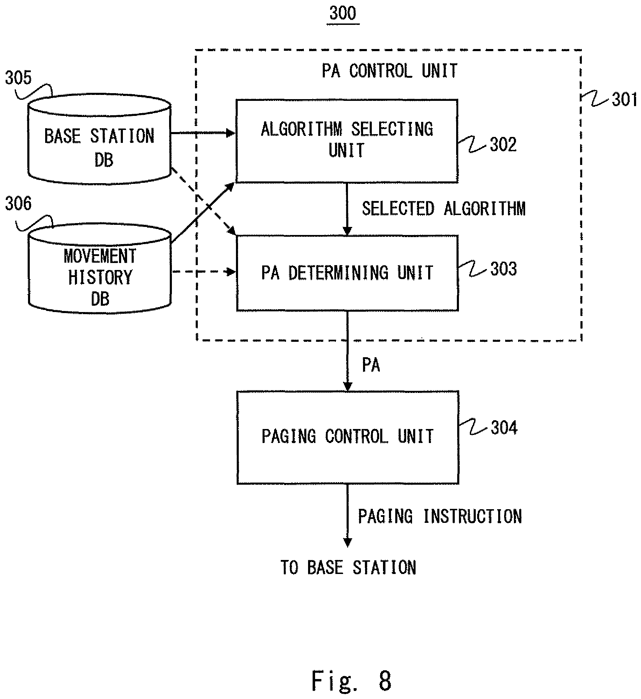

Fig. 8 is a block diagram showing a configuration example of the mobility management node 300 according to the present example. The configuration example shown in Fig. 8 includes a base station database (DB) 305 and a movement history database (DB) 306. The base station DB 305 stores information that is used by the mobility management node 300 commonly to a plurality of mobile stations 100. That is, the base station DB 305 stores the information indicative of the correspondence between an identifier of each base station 200 (hereinafter referred to as the BSID) and a geographical location of each base station 200. The movement history DB 306 stores information on the movement history for each mobile station 100. In other words, the movement history DB 306 stores information on temporal changes in a geographical location of each mobile station 100. That is, the movement history DB 306 stores the history of a base station 200 to which the mobile station 100 has been connected and a time at which the mobile station 100 has been connected to the base station 200. The PA control unit 301 can obtain the temporal changes in the geographical location of each mobile station 100, by using the base station DB 305 and the movement history DB 306 in combination. Note that, the example of Fig. 8 is merely an example. The mobility management node 300 may obtain the temporal changes in the geographical location of any mobile station 100 by referring to a collection history of GPS location information of the mobile station 100.

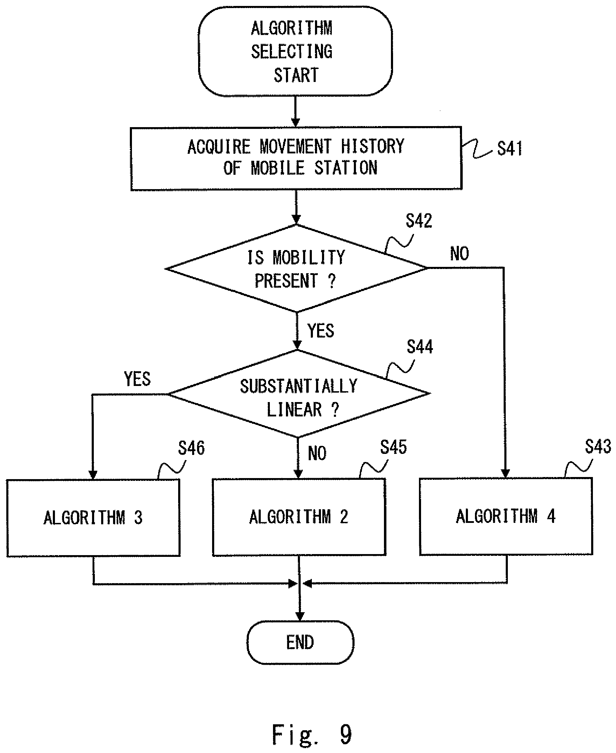

Fig. 9 is a flowchart showing a specific example of the procedure of selecting a PA determining algorithm performed by the mobility management node 300 (algorithm selecting unit 302) according to the present example. Fig. 9 shows an example in which, from the state where Algorithm 1 described in the first embodiment is firstly selected as a basic algorithm, one of Algorithms 2 to 4 described in the first embodiment is selected in accordance with the mobility characteristic of the mobile station 100. In Step S41, the mobility management node 300 acquires the movement history of the mobile station 100. In Step S42, the mobility management node 300 determines whether the mobility of the mobile station 100 is substantially present or absent, by referring to the movement history of the mobile station 100. When the mobility is absent (NO in Step S42), the mobility management node 300 selects Algorithm 4 as the PA determining algorithm to be applied to the mobile station 100 (Step S43).

When the mobility is present (YES in Step S42), the mobility management node 300 determines whether or not the movement trajectory of the mobile station 100 is substantially linear (Step S44). When the movement trajectory of the mobile station 100 is substantially nonlinear (NO in Step S44), the mobility management node 300 selects Algorithm 2 as the PA determining algorithm to be applied to the mobile station 100 (Step S45). On the other hand, when the movement trajectory of the mobile station 100 is substantially linear (YES in Step S44), the mobility management node 300 selects Algorithm 3 as the PA determining algorithm to be applied to the mobile station 100 (Step S46).

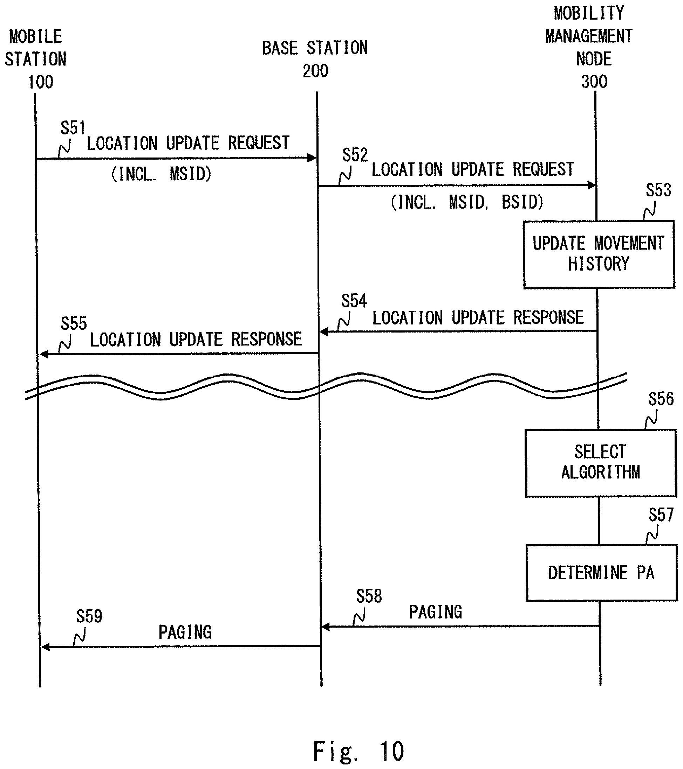

Next, a description will be given of a specific example relating to the acquisition of the movement history of the mobile station 100 performed by the mobility management node 300. In processing a periodic location update request from the mobile station 100, the mobility management node 300 may acquire and accumulate the movement history of the mobile station 100. This example will be described with reference to a sequence diagram of Fig. 10. In Step S51 of Fig. 10, the mobile station 100 sends a periodic location update request to the base station 200.

In Step S52, the base station 200 transfers the location update request received to the mobility management node 300. Here, the identifier (BSID) of the base station 200 having received the location update request is added to the location update request transferred from the base station 200 to the mobility management node 300. Accordingly, the mobility management node 300 can know the current location of the mobile station 100 (i.e., the base station 200 to which the mobile station 100 is being connected) by referring to the location update request transferred from the base station 200. In Step S43, the mobility management node 300 adds the obtained current location of the mobile station 100 (i.e., the base station 200 to which the mobile station 100 is being connected) to the movement history of the mobile station 100. Specifically, the mobility management node 300 may record the obtained current location of the mobile station 100 on the movement history DB 306.

In Steps S54 and S55, in response to the completion of the location updating process with the not-shown subscriber server, the mobility management node 300 sends a location update response to the mobile station 100 via the base station 200.

In Steps S56 and S57, the mobility management node 300 selects the PA determining algorithm and determines the PA, using the movement history of the mobile station 100 acquired in Step S53. The processes in Steps S56 and S57 may be performed in accordance with the flowchart of Fig. 9, for example. As described in the first and second embodiments, the timing at which Steps S56 and S57 are performed is not particularly limited.

In Step S58, the mobility management node 300 sends a paging request to each base station 200 included in the PA of the mobile station 100, in response to arrival of downlink traffic addressed to the mobile station 100 at the upper network 30. In Step S59, the base station 200 transmits a paging signal into the cell 210.

As described above, in the present embodiment, the mobility management node 300 autonomously collects the movement history of the mobile station 100, and selects the PA determining algorithm to be applied to the mobile station 100 using the movement history. Therefore, according to the present embodiment, a proper PA determining algorithm that corresponds to the mobility characteristic of the mobile station 100 can be selected, without causing the subscriber server retaining the subscriber information to retain new information (e.g., the mobility type).

Fourth Example

In the present embodiment, a description will be given of a variation of the first to third embodiments. In the first embodiment and in the second to third examples, the examples in which the mobility management node 300 selects a PA determining algorithm and determines the PA have been shown. However, in light of the flexibility of function arrangement of the mobile communication system, the arrangement of functions for selecting the PA determining algorithm and for determining the PA can be changed as appropriate. Further, functions for selecting the PA determining algorithm and for determining the PA may be separated from each other.

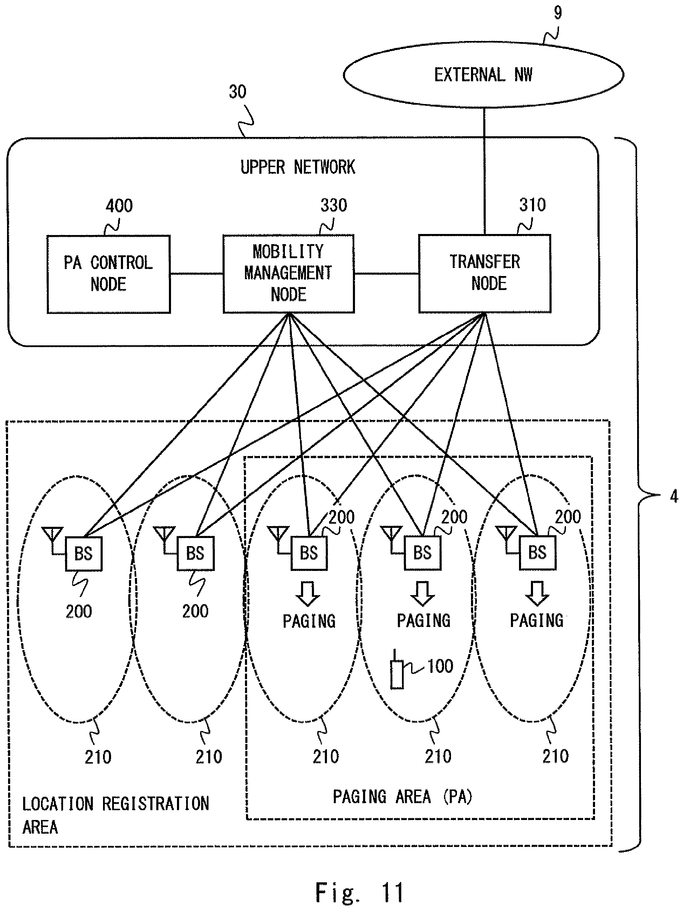

In the following, a description will be given of the example in which functions for selecting the PA determining algorithm and for determining the PA are separated from the mobility management node. Fig. 11 is a block diagram showing a configuration example of the mobile communication system 4 according to the present example. A PA control node 400 shown in Fig. 11 has functions for selecting the PA determining algorithm and for determining the PA described in the first to third embodiments. When paging a mobile station 100, a mobility management node 330 shown in Fig. 11 sends a paging instruction to each base station 200 included in the PA determined by the PA control node 400. The PA control node 400 may be connected to a plurality of mobility management nodes 330, and may select PA determining algorithms and determine PAs for a plurality of mobility management nodes 300. Further, in the configuration example of Fig. 11, the PA control node 400 is arranged in the upper network 30. However, the PA control node 400 is just required to be capable of communicating with the mobility management node 330, and thus may be arranged outside the upper network 30.

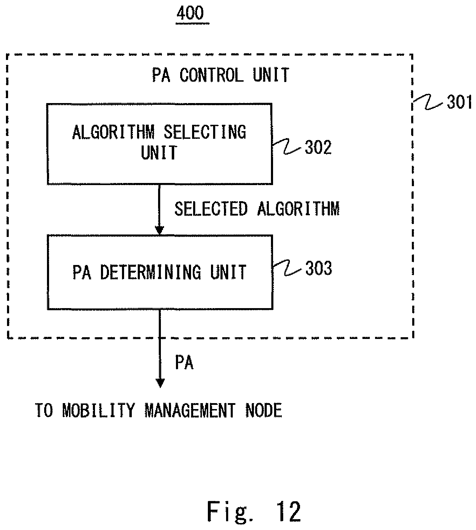

Fig. 12 is a block diagram showing a configuration example of the PA control node 400. As can be seen from Fig. 12, the PA control unit 301, which is described as the element included in the mobility management node 300 in Fig. 2 or 8, is arranged at the PA control node 400.

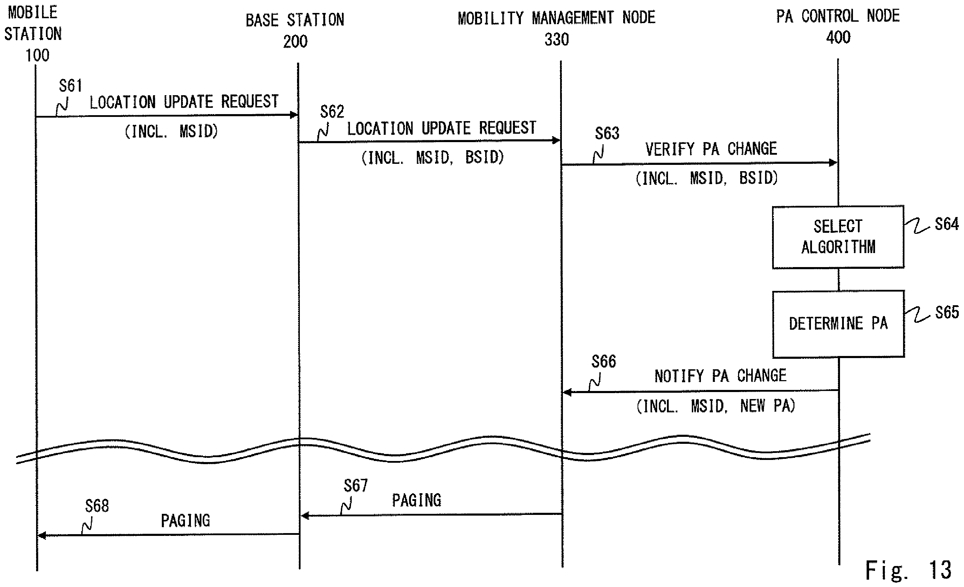

The PA control node 400 may determine the PA of the mobile station 100, for example in response to a request from the mobility management node 330. The mobility management node 330 may send a request (a PA verification) to the PA control node 400, for example in response to reception of a location update request from a mobile station 100. This example will be described with reference to a sequence diagram of Fig. 13.

In Step S61 of Fig. 13, the mobile station 100 sends a location update request to the base station 200. In Step S62, the base station 200 transfers the location update request received from the mobile station 100 to the mobility management node 330. In Step S63, the mobility management node 330 asks the PA control node 400 to verify the change in the PA of the mobile station 100 in response to reception of the location update request. The mobility management node 330 may send a PA change verification message to the PA control node 400.

In Steps S64 and S64, the PA control node 400 selects a PA determining algorithm of the mobile station 100 and determines the PA. The PA control node 400 may perform the procedures of selecting the PA determining algorithm and determining the PA described in any one of the first to third embodiments. In Step S66, the PA control node 400 notifies the mobility management node 330 about the new PA of the mobile station 100.

In Step S67, the mobility management node 330 sends a paging request to each base station 200 included in the PA of the mobile station 100 in response to arrival of downlink traffic addressed to the mobile station 100 at the upper network 30. In Step S68, the base station 200 transmits a paging signal into the cell 210.

As described above, in the present example, the PA control node 400 separated from the mobility management node 330 selects the PA determining algorithm of a mobile station 100 and determines the PA. Accordingly, an increase in the load on the mobility management node 330 can be prevented.


Fifth Example

In the present example, a description will be given of a specific example of the PA determining algorithm 3 according to the first embodiment. The PA determining algorithm 3 includes: specifying a non-circular and non-spherical geographical region that preferentially covers the moving direction of a mobile station 100; and selecting, as the PA, a base station(s) 200 that is within the geographical region or a cell(s) 210 that at least partially overlaps with the geographical region. The present example shows an example in which an elliptical or ellipsoidal geographical region is specified as the non-circular and non-spherical geographical region.

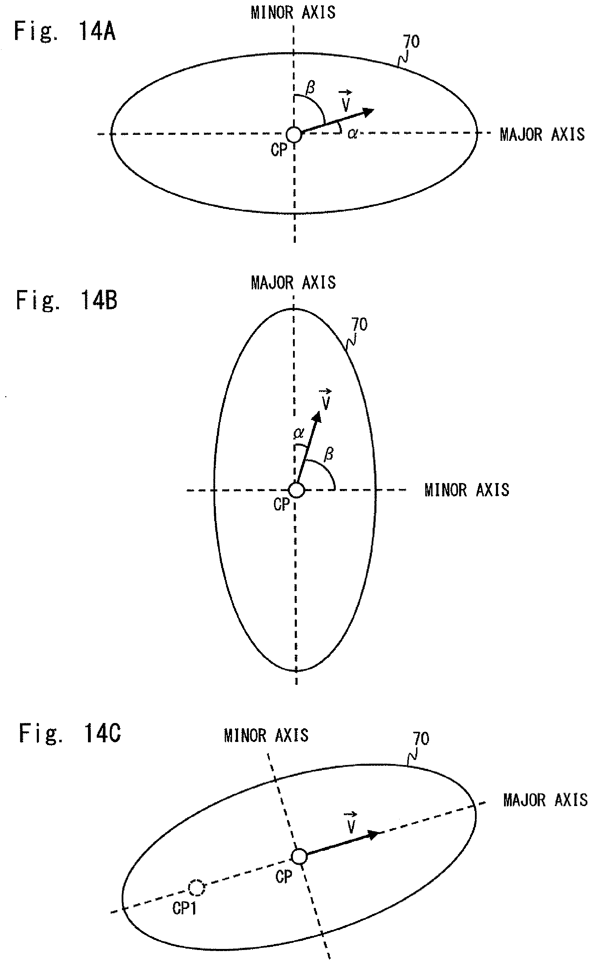

A description will be given of an example of determining the elliptical geographical region so as to preferentially covering the moving direction of the mobile station 100 with reference to Figs. 14A to 14C. Figs. 14A and 14B each shows an example in which the directions of the major axis and the minor axis of an ellipse 70 as the geographical region are fixed. For example, the major axis and the minor axis of the ellipse 70 may agree with the north-south direction and the east-west direction on a map. In the examples shown in Figs. 14A and 14B, the moving direction of the mobile station 100 is used. The moving direction can be obtained by referring the movement history of the mobile station 100. The moving direction of the mobile station 100 may be the average moving direction in a predetermined period. The moving direction of the mobile station 100 may be obtained as a moving speed vector V of the mobile station 100. The sense of the moving speed vector V represents the sense of movement of the mobile station 100. The moving speed vector V may be the average moving speed in a predetermined period.

In Figs. 14A and 14B, the latest location CP of the mobile station 100 is set to the center of the ellipse 70. Then, the major axis and the minor axis of the ellipse 70 are determined as follows. That is, the major axis and the minor axis of the ellipse 70 are determined such that an angle formed between the major axis and the moving direction (e.g., the moving speed vector V) of the mobile station 100 becomes smaller than an angle formed between the minor axis and the moving direction (e.g., the moving speed vector V) of the mobile station 100. In other words, the major axis and the minor axis of the ellipse 70 are determined such that the projection component of the moving speed vector V of the mobile station 100 onto the major axis becomes larger than the other projection component of the moving speed vector V onto the minor axis.

On the other hand, in Fig. 14C, the directions of the major axis and the minor axis of the ellipse 70 as the geographical region are determined to be aligned along the moving direction (e.g., the moving speed vector V) of the mobile station 100. According to the manner of Fig. 14C, as compared to Figs. 14A and 14B, the geographical region where high probability of presence of the mobile station 100 is expected based on the moving direction of the mobile station 100 can be further efficiently included in the PA, and the region where a probability of presence of the mobile station 100 is low can be excluded from the PA.

Note that, in the examples shown in Figs. 14A to 14C, the size of the ellipse 70 as the geographical region may be changed in accordance with the moving speed of the mobile station 100 (e.g., the magnitude of the moving speed vector V). That is, as the moving speed of the mobile station 100 is higher, the size of the ellipse 70 may be set larger.

Further, in the examples shown in Figs. 14A to 14C, though the latest location CP of the mobile station 100 is set to the center of the ellipse 70, the latest location CP may be displaced from the center. For example, as shown in Fig. 14C by CP1, a latest location CP1 of the mobile station 100 may be placed at the position displaced from the center of the ellipse 70 along the major axis direction and opposite to the sense of movement of the mobile station 100 (e.g., the sense of the moving speed vector V). For example, CP1 may be the focal point of the ellipse 70.

Further, the ellipse 70 as the geographical region may not include the latest location CP of the mobile station 100. For example, the current location of the mobile station 100 may be estimated based on the elapsed time from the time point at which the latest location CP of the mobile station 100 was acquired and the moving speed vector V of the mobile station 100. Then, the place of the ellipse 70 may be determined to include the estimated current location.

Still further, the eccentricity of the ellipse 70 can be adjusted in accordance with magnitude of the randomness of movement of the mobile station 100. Specifically, as the linearity of the moving direction of the mobile station 100 is larger, the eccentricity of the ellipse 70 may be set larger, i.e., the difference in the length between the major axis and the minor axis may be set larger. For example, when a variations (e.g., a variance, a standard deviation) in an average movement distance (or an average moving speed) of the mobile station 100 calculated using the movement history of the mobile station 100 is small, it is considered that the randomness of movement of the mobile station 100 is small, or the moving direction of the mobile station 100 is substantially linear. Accordingly, as the variations (e.g., a variance, a standard deviation) in the average movement distance (or the average moving speed) of the mobile station 100 is smaller, the eccentricity of the ellipse 70 may be set larger.

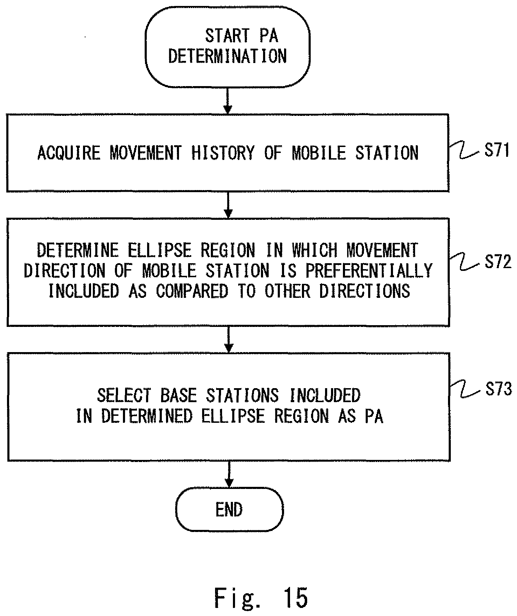

Fig. 15 is a flowchart showing an example of the PA determining procedure by the PA determining algorithm 3 described in the present example. In Step S71, the mobility management node 300 (or the PA control node 400) acquires the movement history of the mobile station 100. In Step S72, the mobility management node 300 (or the PA control node 400) calculates the moving direction of the mobile station 100. Then, the mobility management node 300 (or the PA control node 400) determines the elliptical geographical region which preferentially covers a moving direction of the mobile station 100 as compared to other directions. In Step S73, the mobility management node 300 (or the PA control node 400) selects the base station(s) 200 that is within the determined elliptical geographical region or the cell 210 that at least partially overlaps with the geographical region as the PA.

Hereinafter, specific examples of calculation formulas for obtaining the ellipse 70 as the geographical region are shown. Here, the following parameters (a) to (d) are used for determining the ellipse 70.

(a) The movement history of the mobile station 100, i.e., the position of the mobile station 100 and the acquisition time point thereof: $(x_{k-n+1}, y_{k-n+1}, t_{k-n+1})$, $(x_{k-n+2}, y_{k-n+2}, t_{k-n+2})$, ... $(x_k, y_k, t_k)$
(b) The number of movement history referred to: n
(c) Paging area updating interval: T
(d) Limiting parameter: $\alpha$ $(0 \leq \alpha \leq 1)$

In (a) the movement history as the first parameter, $(x_k, y_k)$ represents the latest location CP of the mobile station 100. That is, here, n-pieces of history are used in turn from the latest location $(x_k, y_k)$ of the mobile station 100. In the following calculation formulas, as (c) the paging area updating interval T is larger, the area of the ellipse 70 becomes larger. Further, (d) the limiting parameter $\alpha$ is the parameter of limiting the area of the ellipse 70 (i.e., the paging area). As the limiting parameter $\alpha$ is smaller, the area of the ellipse 70 becomes smaller.

(First Example)

In a first example, the directions of the major axis and the minor axis of the ellipse 70 as the geographical region are fixed. The directions of the major axis and the minor axis of the ellipse 70 may be agreed with the directions of the x-axis and the y-axis of the movement history of the mobile station 100. For example, the major axis and the minor axis of the ellipse 70 agree with the north-south direction and the east-west direction on a map. In the first example, using n-pieces of the movement history of the mobile station 100, an average movement amount $\sigma_x$ of the mobile station 100 in the x-axis direction per unit time, and an average movement amount $\sigma_y$ in the y-axis direction per unit time are obtained. $\sigma_x$ and $\sigma_y$ are represented by the following formula (1).

[Mathematical Expression 1]

$$\sigma_x = \sqrt{\frac{\sum_{i=1}^{n-1}\left(\frac{x_{k-i+1}-x_{k-i}}{\sqrt{t_{k-i+1}-t_{k-i}}}\right)^2}{n}}, \sigma_y = \sqrt{\frac{\sum_{i=1}^{n-1}\left(\frac{y_{k-i+1}-y_{k-i}}{\sqrt{t_{k-i+1}-t_{k-i}}}\right)^2}{n}} \quad \cdot\cdot\cdot(1)$$

Then, the region within the ellipse shape represented by the inequality as the following formula (2) is obtained using the above-described $\sigma_x$ and $\sigma_y$. This region corresponds to the geographical region (the ellipse 70) for obtaining the paging area. The geographical region represented by formula (2) is the internal region of the ellipse shape whose center is the latest location $(x_k, y_k)$ of the mobile station 100.

[Mathematical Expression 2]

$$\frac{\left(x-x_k\right)^2}{\sigma_x^2 T} + \frac{\left(y-y_k\right)^2}{\sigma_y^2 T} \le \alpha \quad \cdots (2)$$

(Second Example)

In a second example, the directions of the major axis and the minor axis of the ellipse 70 as the geographical region are determined to be aligned along the moving direction of the mobile station 100. Firstly, using the method of least squares, n-pieces of the movement history of the mobile station 100 are approximated by a linear equation. Specifically, n-pieces of observation points $(x_{k-n+1}, t_{k-n+1})$, $(x_{k-n+2}, t_{k-n+2})$, ... $(x_k, t_k)$ relating to the x-coordinate of the mobile station 100 and the acquisition time point thereof are approximated by a linear equation ($t = \mu_x t + b_x$) in a Cartesian coordinate system in which the abscissa axis is the x-axis and the ordinate axis is the time axis (t-axis). Similarly, n-pieces of observation points $(y_{k-n+1}, tk_{-n+1})$, $(y_{k-n+2}, t_{k-n+2})$, ... $(y_k, t_k)$ relating to the y-coordinate of the mobile station 100 and the acquisition time point thereof are approximated by a linear equation ($t = \mu_y t + b_y$). At this time, gradients $\mu_x$ and $\mu_y$ can be obtained by the following formulas (3) and (4).
[Mathematical Expression 3]

$$\mu_x = \frac{n\sum_{i=1}^{n} x_{k-i+1} t_{k-i+1} - \sum_{i=1}^{n} x_{k-i+1} \sum_{i=1}^{n} t_{k-i+1}}{n\sum_{i=1}^{n} x_{k-i+1}^2 - \left(\sum_{i=1}^{n} x_{k-i+1}\right)^2} \quad \cdots (3)$$

[Mathematical Expression 4]

$$\mu_y = \frac{n\sum_{i=1}^{n} y_{k-i+1} t_{k-i+1} - \sum_{i=1}^{n} y_{k-i+1} \sum_{i=1}^{n} t_{k-i+1}}{n\sum_{i=1}^{n} y_{k-i+1}^2 - \left(\sum_{i=1}^{n} y_{k-i+1}\right)^2} \quad \cdots (4)$$

Next, in an xy-coordinate system, an elevation angle $\theta$ of the moving direction of the mobile station 100 relative to the x-axis is obtained. The elevation angle $\theta$ can be obtained by the following formula (5) using gradients $\mu_x$ and $\mu_y$. Further, by rotating the coordinate system of the movement history by the elevation angle $\theta$, the directions of the major axis and the minor axis of the ellipse 70 as the geographical region can be converted so as to align along the moving direction of the mobile station 100. Defining the original coordinate system to be (x, y) and the converted coordinate system to be (x', y'), the rotary conversion of the coordinate system can be expressed by formula (6).
[Mathematical Expression 5]

$$\theta = \tan^{-1}\left(\frac{\mu_x}{\mu_y}\right) \quad \cdots (5)$$

[Mathematical Expression 6]

$$(x', y') = \begin{pmatrix} \cos\theta & \sin\theta \\ -\sin\theta & \cos\theta \end{pmatrix} \begin{pmatrix} x \\ y \end{pmatrix} \quad \cdots (6)$$

Then, similarly to the first example, using n-pieces of movement history of the mobile station 100, an average movement amount $\sigma'_x$ of the mobile station 100 in the x'-axis direction per unit time and an average movement amount $\sigma'_y$ in the y'-axis direction per unit time are obtained. $\sigma'_x$ and $\sigma'_y$ can be represented by the following formula (7).
[Mathematical Expression 7]

$$\sigma'_x = \sqrt{\frac{\sum_{i=1}^{n-1}\left(\frac{x'_{k-i+1}-x'_{k-i}}{\sqrt{t_{k-i+1}-t_{k-i}}}\right)^2}{n}} , \sigma'_y = \sqrt{\frac{\sum_{i=1}^{n-1}\left(\frac{y'_{k-i+1}-y'_{k-i}}{\sqrt{t_{k-i+1}-t_{k-i}}}\right)^2}{n}} \quad \cdots (7)$$

Finally, using the above-described $\sigma'_x$ and $\sigma'_y$, the region within the ellipse shape represented by the inequality as the following formula (8) is obtained. This region corresponds to the geographical region (the ellipse 70) for obtaining the paging area.
[Mathematical Expression 8]

$$\frac{(x'-x'_k)^2}{\sigma'^2_x T} + \frac{(y'-y'_k)^2}{\sigma'^2_y T} \leq \alpha \quad \cdots (8)$$

Note that, in the foregoing, the description has been given of the elliptical geographical region. However, in the case where three-dimensional location information is obtained as the movement history of the mobile station 100, the geographical region specified by the PA determining algorithm 3 may be an ellipsoid.

Other Examples

The processes performed by the mobility management node 300, the PA control node 400, and the PA control unit 301 described in the first to fifth embodiments may be implemented by using a semiconductor processing device including an ASIC (Application Specific Integrated Circuit). Further, such processes may be implemented by causing a computer such as a microprocessor, a DSP (Digital Signal Processor) and the like to execute a program. Specifically, one or more programs including instructions for causing a computer to execute the algorithms which have been described with reference to the flowcharts and the sequence diagrams may be created and supplied to the computer.

This program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.).
The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a radio communication line.

The first to fifth embodiments can be combined as appropriate.

Referential Example

Patent Literatures 1 and 2 merely disclose changing the paging area in accordance with the magnitude of the moving speed of the mobile station, and are silent about determining the paging area taking into account of the moving direction of the mobile station. In contrast thereto, the PA determining algorithm 3 described in the first to fifth embodiments is characterized in determining the paging area (PA) of the mobile station 100 based on a non-circular and non-spherical geographical region which preferentially covers a moving direction of the mobile station 100 as compared to other directions. Accordingly, the PA determined by the PA determining algorithm 3 is highly possibly capable of efficiently covering the moving direction of the mobile station 100, as compared to the PA determined by the techniques of Patent Literatures 1 and 2. Accordingly, the PA determining algorithm 3 can contribute to reducing the paging load and preventing paging failure, as compared to the techniques of Patent Literatures 1 and 2.

That is, the PA determining algorithm 3 described in the first to fifth embodiments exhibits an excellent effect even in the case where the selecting (changing) of the PA determining algorithm corresponding to the mobility characteristic of the mobile station 100 is not performed. In other words, the obtainment of the effect of the PA determining algorithm 3 does not necessitate selecting the PA determining algorithm corresponding to the mobility characteristic of the mobile station 100. Embodiments using the PA determining algorithm 3 can be described, for example, as in the following supplementary notes.

(Supplementary Note 1)

A paging area control method including determining a paging area of a mobile station based on a non-circular and non-spherical geographical region which preferentially covers a moving direction of the mobile station as compared to other directions.

(Supplementary Note 2)

The method according to Supplementary Note 1, wherein the determining includes determining, as the paging area, an area that is within a location registration area to which the mobile station belongs.

(Supplementary Note 3)

The method according to Supplementary Note 1 or 2, wherein a shape of the region is an ellipse or an ellipsoid.

(Supplementary Note 4)

The method according to Supplementary Note 3, wherein an angle formed between a major axis of the ellipse or ellipsoid and the moving direction is smaller than an angle formed between a minor axis of the ellipse or ellipsoid and the moving direction.

(Supplementary Note 5)

The method according to Supplementary Note 3 or 4, wherein the ellipse or the ellipsoid has the major axis that is aligned along the moving direction.

(Supplementary Note 6)

The method according to any one of Supplementary Notes 3 to 5, wherein an eccentricity of the ellipse or ellipsoid is determined in accordance with a randomness of movement of the mobile station or variations in the moving direction.

(Supplementary Note 7)

The method according to any one of Supplementary Notes 1 to 6, wherein the determining is performed in response to arrival of downlink traffic addressed to the mobile station.

(Supplementary Note 8)

The method according to any one of Supplementary Notes 1 to 7, wherein the determining includes selecting base stations within the region as the paging area.

(Supplementary Note 9)

The method according to Supplementary Note 2 or any one of Supplementary Notes 3 to 7 depending from Supplementary Note 2, wherein the determining includes selecting, as the paging area, base stations within the region from base stations within the location registration area.

(Supplementary Note 10)

The method according any one of Supplementary Notes 1 to 7, wherein the determining includes selecting, as the paging area, cells that partially overlap with the region.

(Supplementary Note 11)

The method according to any one of Supplementary Note 2 or any one of Supplementary Notes 3 to 7 depending from Supplementary Note 2, wherein the determining includes selecting, as the paging area, cells that at least partially overlap with the region from cells within the location registration area.

(Supplementary Note 12)

The method according to any one of Supplementary Notes 1 to 11, further including determining the moving direction using a plurality of pieces of location information on the mobile station collected at different time points.

(Supplementary Note 13)

A paging area control apparatus configured to determine a paging area of a mobile station based on a non-circular and non-spherical geographical region which preferentially covers a moving direction of the mobile station as compared to other directions.

(Supplementary Note 14)

A mobile communication system including:

determining means for determining a paging area of a mobile station based on a non-circular and non-spherical geographical region which preferentially covers a moving direction of the mobile station as compared to other directions; and
paging means for sending a paging signal into the paging area in order to page the mobile station.

(Supplementary Note 15)

A program for causing a computer to perform a paging area control method including determining a paging area of a mobile station based on a non-circular and non-spherical geographical region which preferentially covers a moving direction of the mobile station as compared to other directions.

**Reference Signs List**

| | |
|---|---|
| 1, 2, 4 | MOBILE COMMUNICATION SYSTEM |
| 9 | EXTERNAL NETWORK |
| 30 | CORE NETWORK |
| 100 | MOBILE STATION |
| 200 | BASE STATION |
| 210 | CELL |
| 300, 330 | MOBILITY MANAGEMENT NODE |
| 301 | PAGING AREA (PA) CONTROL UNIT |
| 302 | Algorithm SELECTING UNIT |
| 303 | PAGING AREA (PA) DETERMINING UNIT |
| 304 | PAGING CONTROL UNIT |
| 305 | BASE STATION DATABASE (DB) |
| 306 | MOVEMENT HISTORY DATABASE (DB) |
| 310 | TRANSFER NODE |
| 320 | SUBSCRIBER SERVER |
| 400 | PAGING AREA (PA) CONTROL NODE |

**Claims**

**1.**   A paging area control apparatus (300) comprising:

selecting means (302) for selecting an algorithm that corresponds to a mobility characteristic of a mobile station (100) from a plurality of paging area determining algorithms; and

determining means (303) for determining a paging area of the mobile station (100) using the selected algorithm, wherein

the plurality of paging area determining algorithms include a first algorithm,

the selecting means (302) is adapted to select, from the plurality of paging area determining algorithms, the first algorithm to be used by the determining means (303) to determine the paging area,

the first algorithm includes determining the paging area based on a non-circular and non-spherical geographical region (70) which covers a moving direction of the mobile station (100) as compared to other directions,

the region (70) is in the shape of an ellipse or an ellipsoid, and

an eccentricity of the ellipse or the ellipsoid is determined in accordance with magnitude of a randomness of movement of the mobile station (100) or variations in the moving direction, the randomness of movement of the mobile station (100) being a movement without regularity in a movement trajectory of the mobile station (100).

2. The control apparatus according to Claim 1, wherein the mobility characteristic includes at least one of presence/absence of mobility, a moving speed, a moving direction, a restriction on a range of movement, the randomness of movement, and a repetitiveness of movement.

3. The control apparatus according to Claim 1 or 2, wherein the mobility characteristic is designated by type information of the mobile station (100).

4. The control apparatus according to Claim 3, wherein the type information is distinguished based on at least one of presence/absence of mobility, a moving speed, a moving direction, restriction on a range of movement, the randomness of movement, and a repetitiveness of movement.

5. The control apparatus according to any one of Claims 1 to 4, wherein each of the plurality of paging area determining algorithms is previously associated with at least one of mobility characteristics.

6. The control apparatus according to any preceding Claim, wherein an angle formed between a major axis of the ellipse or ellipsoid and the moving direction is smaller than an angle formed between a minor axis of the ellipse or ellipsoid and the moving direction.

7. The control apparatus according to any preceding Claim, wherein the ellipse or the ellipsoid has the major axis that is aligned along the moving direction.

8. The control apparatus according to any one of Claims 1 to 7, wherein the first algorithm includes selecting base stations within the region as the paging area, from base stations within the location registration area to which the mobile station (100) belongs.

9. The control apparatus according to any one of Claims 1 to 8, wherein the first algorithm includes selecting, as the paging area, cells that at least partially overlap with the region from cells within the location registration area to which the mobile station (100) belongs.

10. A paging area control method comprising:

selecting (S22) an algorithm that corresponds to a mobility characteristic of a mobile station (100) from a plurality of paging area determining algorithms; and

determining (S23) a paging area of the mobile station (100) using the selected algorithm, wherein

the plurality of paging area determining algorithms include a first algorithm,

the selecting (S22) includes selecting, from the plurality of paging area determining algorithms, the first algorithm to be used in the determining of the paging area, and

the first algorithm includes determining (S73) the paging area based on a non-circular and non-spherical geographical region (70) which covers a moving direction of the mobile station (100) as compared to other directions,

the region (70) is in the shape of an ellipse or an ellipsoid, and

an eccentricity of the ellipse or the ellipsoid is determined in accordance with magnitude of a randomness of movement of the mobile station (100) or variations in the moving direction, the randomness of movement of the mobile station (100) being a movement without regularity in a movement trajectory of the mobile station (100).

**11.** A mobile communication system (2) comprising:

a paging area control apparatus (300) according to any one of claims 1 to 9; and
paging means (200) for sending a paging signal into the paging area determined by the paging area control apparatus (300), in order to page the mobile station (100).

**12.** The mobile communication system (2) according to claim 11, further comprising a mobile station (100) configured to initiate communication in response to the paging signal.

**Patentansprüche**

**1.** Paging-Bereich-Steuervorrichtung (300), mit:

einer Auswahleinrichtung (302) zum Auswählen eines einer Mobilitätscharakteristik einer Mobilstation (100) entsprechenden Algorithmus aus mehreren Paging-Bereich-Bestimmungsalgorithmen; und
einer Bestimmungseinrichtung (303) zum Bestimmen eines Paging-Bereichs der Mobilstation (100) unter Verwendung des ausgewählten Algorithmus, wobei
die mehreren Paging-Bereich-Bestimmungsalgorithmen einen ersten Algorithmus aufweisen,
die Auswahleinrichtung (302) dazu eingerichtet ist, aus den mehreren Paging-Bereich-Bestimmungsalgorithmen den ersten Algorithmus auszuwählen, der durch die Bestimmungseinrichtung (303) zum Bestimmen des Paging-Bereichs verwendet werden soll,
der erste Algorithmus das Bestimmen des Paging-Bereichs basierend auf einem nicht-kreisförmigen und nicht-sphärischen geographischen Gebiet (70) aufweist, das eine Bewegungsrichtung der Mobilstation (100) im Vergleich zu anderen Richtungen abdeckt,
das Gebiet (70) die Form einer Ellipse oder eines Ellipsoids hat, und
eine Exzentrizität der Ellipse oder des Ellipsoids gemäß einer Größe einer Zufälligkeit der Bewegung der Mobilstation (100) oder gemäß Variationen in der Bewegungsrichtung bestimmt wird, wobei die Zufälligkeit der Bewegung der Mobilstation (100) eine Bewegung ohne Regelmäßigkeit in einer Bewegungstrajektorie der Mobilstation (100) ist.

**2.** Steuervorrichtung nach Anspruch 1, wobei die Mobilitätscharakteristik mindestens eines der folgenden Merkmale aufweist: Vorhandensein/Nichtvorhandensein einer Mobilität, eine Bewegungsgeschwindigkeit, eine Bewegungsrichtung, eine Einschränkung eines Bewegungsbereichs, die Zufälligkeit der Bewegung und eine Wiederholungshäufigkeit einer Bewegung.

**3.** Steuervorrichtung nach Anspruch 1 oder 2, wobei die Mobilitätscharakteristik durch Typinformation der Mobilstation (100) spezifiziert ist.

**4.** Steuervorrichtung nach Anspruch 3, wobei die Typinformation basierend auf mindestens einem der folgenden Merkmale unterschieden wird:

Vorhandensein/Nichtvorhandensein von Mobilität, eine
Bewegungsgeschwindigkeit, eine Bewegungsrichtung, eine Einschränkung eines Bewegungsbereichs, die Zufälligkeit einer Bewegung und eine Wiederholungshäufigkeit einer Bewegung.

**5.** Steuervorrichtung nach einem der Ansprüche 1 bis 4, wobei jedem der mehreren Paging-Bereich-Bestimmungsalgorithmen im Voraus mindestens eine Mobilitätscharakteristik zugewiesen ist.

**6.** Steuervorrichtung nach einem der vorangehenden Ansprüche, wobei ein Winkel, der zwischen einer Hauptachse der Ellipse oder des Ellipsoids und der Bewegungsrichtung gebildet wird, kleiner ist als ein Winkel, der zwischen einer Nebenachse der Ellipse oder des Ellipsoids und der Bewegungsrichtung gebildet wird.

**7.** Steuervorrichtung nach einem der vorangehenden Ansprüche, wobei die Hauptachse der Ellipse oder des Ellipsoids entlang der Bewegungsrichtung ausgerichtet ist.

**8.** Steuervorrichtung nach einem der Ansprüche 1 bis 7, wobei der erste Algorithmus das Auswählen von Basisstationen innerhalb des Gebiets als der Paging-Bereich aus Basisstationen innerhalb des Einbuchungsbereichs aufweist, dem die Mobilstation (100) zugehörig ist.

9. Steuervorrichtung nach einem der Ansprüche 1 bis 8, wobei der erste Algorithmus das Auswählen von Zellen als den Paging-Bereich aufweist, die zumindest teilweise das Gebiet von Zellen innerhalb des Einbuchungsbereichs überlappen, dem die Mobilstation (100) zugehörig ist.

10. Paging-Bereich-Steuerverfahren, mit den Schritten:

Auswählen (S22) eines einer Mobilitätscharakteristik einer Mobilstation (100) entsprechenden Algorithmus aus mehreren Paging-Bereich-Bestimmungsalgorithmen; und
Bestimmen (S23) eines Paging-Bereichs der Mobilstation (100) unter Verwendung des ausgewählten Algorithmus, wobei
die mehreren Paging-Bereich-Bestimmungsalgorithmen einen ersten Algorithmus aufweisen,
das Auswählen (S22) das Auswählen des ersten Algorithmus, der bei der Bestimmung des Paging-Bereichs verwendet werden soll, aus den mehreren Paging-Bereich-Bestimmungsalgorithmen aufweist, und
der erste Algorithmus das Bestimmen (S73) des Paging-Bereichs basierend auf einem nicht-kreisförmigen und nicht-sphärischen geographischen Gebiet (70) aufweist, das eine Bewegungsrichtung der Mobilstation (100) im Vergleich zu anderen Richtungen abdeckt,
wobei das Gebiet (70) die Form einer Ellipse oder eines Ellipsoids hat, und
wobei eine Exzentrizität der Ellipse oder des Ellipsoids gemäß der Größe einer Zufälligkeit der Bewegung der Mobilstation (100) oder gemäß Variationen in der Bewegungsrichtung bestimmt wird, wobei die Zufälligkeit der Bewegung der Mobilstation (100) eine Bewegung ohne Regelmäßigkeit in einer Bewegungstrajektorie der Mobilstation (100) ist.

11. Mobilkommunikationssystem (2) mit:

einer Paging-Bereich-Steuervorrichtung (300) nach einem der Ansprüche 1 bis 9; und
einer Paging-Einrichtung (200) zum Übertragen eines Paging-Signals in den durch die Paging-Bereich-Steuervorrichtung (300) bestimmten Paging-Bereich zum Pagen der Mobilstation (100).

12. Mobilkommunikationssystem (2) nach Anspruch 11, ferner mit einer Mobilstation (100), die dafür konfiguriert ist, in Antwort auf das Paging-Signal eine Kommunikation einzuleiten.

**Revendications**

1. Appareil de contrôle de zone de radiomessagerie (300) comprenant :

des moyens de sélection (302) pour sélectionner un algorithme qui correspond à une caractéristique de mobilité d'une station mobile (100) parmi une pluralité d'algorithmes de détermination de zone de radiomessagerie ; et
des moyens de détermination (303) pour déterminer une zone de radiomessagerie de la station mobile (100) en utilisant l'algorithme sélectionné, où
la pluralité d'algorithmes de détermination de zone de radiomessagerie incluent un premier algorithme,
les moyens de sélection (302) sont adaptés pour sélectionner, parmi la pluralité d'algorithmes de détermination de zone de radiomessagerie, le premier algorithme devant être utilisé par les moyens de détermination (303) pour déterminer la zone de radiomessagerie,
le premier algorithme inclut la détermination de la zone de radiomessagerie sur la base d'une région géographique non circulaire et non sphérique (70) qui couvre une direction de déplacement de la station mobile (100) comparativement à d'autres directions,
la région (70) a la forme d'une ellipse ou d'un ellipsoïde, et
une excentricité de l'ellipse ou de l'ellipsoïde est déterminée conformément à la grandeur d'un caractère aléatoire de déplacement de la station mobile (100) ou de variations dans la direction de déplacement, le caractère aléatoire de déplacement de la station mobile (100) étant un déplacement sans régularité dans une trajectoire de déplacement de la station mobile (100).

2. Appareil de contrôle selon la revendication 1, dans lequel la caractéristique de mobilité inclut au moins l'un parmi la présence/absence de mobilité, une vitesse de déplacement, une direction de déplacement, une restriction sur une plage de déplacement, le caractère aléatoire de déplacement, et une répétitivité de déplacement.

**3.** Appareil de contrôle selon la revendication 1 ou 2, dans lequel la caractéristique de mobilité est désignée par des informations de type de la station mobile (100).

**4.** Appareil de contrôle selon la revendication 3, dans lequel les informations de type sont distinguées sur la base d'au moins l'un parmi la présence/absence de mobilité, une vitesse de déplacement, une direction de déplacement, une restriction sur une plage de déplacement, le caractère aléatoire de déplacement, et une répétitivité de déplacement.

**5.** Appareil de contrôle selon l'une quelconque des revendications 1 à 4, dans lequel chacun de la pluralité d'algorithmes de détermination de zone de radiomessagerie est associé précédemment à au moins l'une de caractéristiques de mobilité.

**6.** Appareil de contrôle selon l'une quelconque des revendications précédentes, dans lequel un angle formé entre un axe majeur de l'ellipse ou de l'ellipsoïde et la direction de déplacement est inférieur à un angle formé entre un axe mineur de l'ellipse ou de l'ellipsoïde et la direction de déplacement.

**7.** Appareil de contrôle selon l'une quelconque des revendications précédentes, dans lequel l'ellipse ou l'ellipsoïde a l'axe majeur qui est aligné le long de la direction de déplacement.

**8.** Appareil de contrôle selon l'une quelconque des revendications 1 à 7, dans lequel le premier algorithme inclut la sélection de stations de base dans la région comme la zone de radiomessagerie, parmi des stations de base dans la zone d'enregistrement de localisation à laquelle appartient la station mobile (100) .

**9.** Appareil de contrôle selon l'une quelconque des revendications 1 à 8, dans lequel le premier algorithme inclut la sélection, comme la zone de radiomessagerie, de cellules qui chevauchent au moins partiellement la région parmi des cellules dans la zone d'enregistrement de localisation à laquelle appartient la station mobile (100).

**10.** Procédé de contrôle de zone de radiomessagerie comprenant :

sélectionner (S22) un algorithme qui correspond à une caractéristique de mobilité d'une station mobile (100) parmi une pluralité d'algorithmes de détermination de zone de radiomessagerie ; et
déterminer (S23) une zone de radiomessagerie de la station mobile (100) en utilisant l'algorithme sélectionné, où la pluralité d'algorithmes de détermination de zone de radiomessagerie incluent un premier algorithme,
la sélection (S22) inclut la sélection, parmi la pluralité d'algorithmes de détermination de zone de radiomessagerie, du premier algorithme devant être utilisé lors de la détermination de la zone de radiomessagerie, et
le premier algorithme inclut la détermination (S73) de la zone de radiomessagerie sur la base d'une région géographique non circulaire et non sphérique (70) qui couvre une direction de déplacement de la station mobile (100) comparativement à d'autres directions,
la région (70) a la forme d'une ellipse ou d'un ellipsoïde, et
une excentricité de l'ellipse ou de l'ellipsoïde est déterminée conformément à la grandeur d'un caractère aléatoire de déplacement de la station mobile (100) ou de variations dans la direction de déplacement, le caractère aléatoire de déplacement de la station mobile (100) étant un déplacement sans régularité dans une trajectoire de déplacement de la station mobile (100).

**11.** Système de communication mobile (2) comprenant :

un appareil de contrôle de zone de radiomessagerie (300) selon l'une quelconque des revendications 1 à 9 ; et
des moyens de radiomessagerie (200) pour envoyer un signal de radiomessagerie dans la zone de radiomessagerie déterminée par l'appareil de contrôle de zone de radiomessagerie (300), afin d'appeler par radiomessagerie la station mobile (100).

**12.** Système de communication mobile (2) selon la revendication 11, comprenant en outre une station mobile (100) configurée pour initier une communication en réponse au signal de radiomessagerie.

EP 2 822 336 B1

Fig. 1

300

PA CONTROL UNIT 301

ALGORITHM SELECTING
UNIT 302

SELECTED ALGORITHM

PA DETERMINING UNIT 303

PA

PAGING CONTROL UNIT 304

PAGING INSTRUCTION

TO BASE STATION

Fig. 2

START PA
CONTROL

↓

ACQUIRE MOBILITY CHARACTERISTIC
OF MOBILE STATION ⟿ S11

↓

SELECT PA DETERMINING ALGORITHM
CORRESPONDING TO MOBILITY CHARACTERISTIC ⟿ S12

↓

DETERMINE PA OF MOBILE STATION USING
SELECTED ALGORITHM ⟿ S13

↓

END

Fig. 3

Fig. 4

# Fig. 5

| MSID (e.g. IMSI) | MOBILITY TYPE |
|---|---|
| ID1 | TYPE A (e.g. GENERAL USER) |
| ID2 | TYPE B (e.g. AUTOMOBILE) |
| ID3 | TYPE C (e.g. RAILWAY VEHICLE) |
| ID4 | TYPE D (e.g. VENDING MACHINE) |
| ⋮ | ⋮ |

# Fig. 6

START PA CONTROL

ACQUIRE MOBILITY TYPE OF MOBILE STATION FROM SUBSCRIBER SERVER — S21

SELECT PA DETERMINING ALGORITHM CORRESPONDING TO ACQUIRED MOBILITY TYPE — S22

DETERMINE PA OF MOBILE STATION USING SELECTED ALGORITHM — S23

END

EP 2 822 336 B1

MOBILE
STATION
100

BASE STATION
200

MOBILITY MANAGEMENT NODE
300

SUBSCRIBER
SERVER
320

S31 ATTACH REQUEST OR
LOCATION UPDATE REQUEST

(INCL. MSID)

S32 ATTACH REQUEST OR
LOCATION UPDATE REQUEST

(INCL. MSID)

S33 SUBSCRIBER INFORMATION
REQUEST

(INCL. MSID)

SUBSCRIBER INFORMATION S34

(INCL. MOBILITY TYPE)

S35

PROCESS ATTACHING

SELECT ALGORITHM S36

DETERMINE PA S37

S38 PAGING

S39 PAGING

Fig. 7

<u>300</u>

Fig. 8

Fig. 9

MOBILE
STATION
100

BASE STATION
200

MOBILITY
MANAGEMENT
NODE
300

S51 LOCATION UPDATE REQUEST

(INCL. MSID)

S52 LOCATION UPDATE REQUEST

(INCL. MSID, BSID)

S53

UPDATE MOVEMENT
HISTORY

S54 LOCATION UPDATE RESPONSE

S55 LOCATION UPDATE RESPONSE

S56

SELECT
ALGORITHM

S57

DETERMINE PA

S58 PAGING

S59 PAGING

Fig. 10

9

EXTERNAL NW

30

UPPER NETWORK

400

PA CONTROL
NODE

330

MOBILITY
MANAGEMENT
NODE

310

TRANSFER
NODE

4

200

BS   BS   BS   BS   BS

200   200   200

⇩   ⇩   ⇩

PAGING   PAGING   PAGING

100

210   210   210   210   210

LOCATION REGISTRATION
AREA

PAGING AREA (PA)

F i g.  11

400

PA CONTROL UNIT 〜301

ALGORITHM SELECTING UNIT 〜302

SELECTED ALGORITHM

PA DETERMINING UNIT 〜303

PA

TO MOBILITY MANAGEMENT NODE

Fig. 12

Fig. 13

Fig. 14A

Fig. 14B

Fig. 14C

```
              ┌─────────────────────┐
              │     START  PA       │
              │   DETERMINATION     │
              └─────────────────────┘
                        │
                        ▼
  ┌───────────────────────────────────────────────┐
  │                                               │        S71
  │  ACQUIRE MOVEMENT HISTORY OF MOBILE STATION   │
  │                                               │
  └───────────────────────────────────────────────┘
                        │
                        ▼
  ┌───────────────────────────────────────────────┐
  │  DETERMINE ELLIPSE REGION IN WHICH MOVEMENT   │
  │  DIRECTION OF MOBILE STATION IS PREFERENTIALLY │        S72
  │  INCLUDED AS COMPARED TO OTHER DIRECTIONS     │
  └───────────────────────────────────────────────┘
                        │
                        ▼
  ┌───────────────────────────────────────────────┐
  │         SELECT BASE STATIONS INCLUDED         │        S73
  │       IN DETERMINED ELLIPSE REGION AS PA      │
  └───────────────────────────────────────────────┘
                        │
                        ▼
              ┌─────────────────────┐
              │        END          │
              └─────────────────────┘
```

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008063734 A1
- WO 2004002186 A2
- WO 2006079210 A1
- JP 2011049616 A
- JP 2006211335 A